# EUROPEAN PATENT APPLICATION

(11) **EP 3 989 254 A2**
(43) Date of publication of application: **27.04.2022**
(21) Application number: 20826635.3
(22) Date of filing: 22.06.2020
(51) Int. Cl.: H01H 9/02, H01R 25/00, H01H 23/00, H01H 23/04, H01H 13/00, F21V 23/04

(54) **CABLE SWITCH WITH USB CHARGER**

(30) Priority: 21.06.2019 ES 201931053 U
(71) Applicant: Rogowiec, Bartosz Zygmunt, 08005 Barcelona (ES)
(72) Inventor: Rogowiec, Bartosz Zygmunt, 08005 Barcelona (ES)
(74) Representative: Espiell Gomez, Ignacio
(86) International application number: PCT/ES2020/070408
(87) International publication number: WO 2020/254712

(57) **Abstract**

The invention relates to a cable switch with a USB charger, which is formed from: a protective case (2) containing electricity-interrupting means (3) connected between an input connector (4) and an output connector (5), said connectors being connected to the live wire (F) and the neutral wire (N) of the electric cable (6) in which the switch is installed; a power supply (7) connected between the input connector (4) and the output connector (5); and at least one USB connection port (8) connected to the power supply (7). Preferably, the switch comprises an EMI filter (9) connected between the input connector (4) and the power supply (7). Preferably, the power supply (7) is a power source that converts 110-220 V alternating current into 5V/2A continuous current.

## Description

### SUBJECT MATTER OF THE INVENTION

The invention, as expressed in the wording of this specification, refers to a cable switch with a USB charger that provides, for its intended function, advantages and characteristics, which are described in detail below.

The subject matter of this invention is an electrical switch that, in addition to the conventional components that allow the opening or closing the pathway of electrical current through the cable in which they are installed, to turn a device on or off, for example a lamp. It comprises a series of additional electronic components, including at least one USB connector, that makes it possible, by connecting the corresponding USB cable, to charge the battery of an electronic device such as, for example, a mobile phone, electronic tablet, laptop or similar.

### FIELD OF APPLICATION OF THE INVENTION

The field of application of this invention is framed within the sector of the industry dedicated to the manufacture of electrical accessories, focusing particularly on the field of switch mechanisms, while also covering the field of battery chargers for electronic devices by USB connection.

### BACKGROUND OF THE INVENTION

As is known, most portable electronic devices have a battery that must be recharged periodically by connecting to the network through a suitable device.

In most current devices, said device is a USB charger, consisting of a plug socket that, in addition to the corresponding electronic components, has a female USB connector to which the male USB connector of a cable is connected, the opposite end of which has another connector to connect to the device.

The problem is, on the one hand, that these chargers are normally only designed to provide this function and, on the other hand, that when they are plugged in, they occupy a network socket connection preventing it from being used for other purposes, which can lead to a nuisance, given the growing use of electrical appliances in homes and the limited network sockets they have.

The purpose of this invention is to provide a means to take advantage of the pathway of electric current in a common electrical accessory, such as a switch, and to combine both, avoiding inconveniences, in such a way that, in addition to serving to charge the battery of an electronic device, it also has another function, namely, to take advantage of an electrical accessory with a specific function, such as that of a switch, while also allowing the battery of an electronic device to be charged and, at the same time, to avoid occupying an additional network socket.

On the other hand, and as a reference to the current state of the art, it should be noted that the existence of any other cable switch with USB charger, or any other similar invention that presents technical characteristics that are equal or similar to those by the one claimed herein is unknown, at least to the applicant.

It should be noted that the initials USB refer to Universal Series Bus, which is a communications bus in compliance with a standard that defines cables, connectors and protocols in a bus in order to connect, communicate and provide electrical power between computers, peripherals and electronic devices.

### DESCRIPTION OF THE INVENTION

The cable switch with USB charger that the invention proposes constitutes an optimal solution to the aforementioned technical problem, the characterizing details that distinguish it being conveniently collected in the final claims that accompany this description.

Specifically, what the invention proposes, as noted above, is an electrical cable switch (both table and floor) that, in addition to the conventional components that allow its function to open or close the pathway of electrical current through the cable in which it is installed, to turn on or off an electrical appliance, for example a lamp, it also includes a series of additional electronic components and, at least, one USB connector that makes it possible, by connecting a corresponding USB cable, to charge the battery of an electronic device such as for example a mobile phone, electronic tablet, laptop or the like.

For this reason, and more specifically, the switch of the invention, formed in a known way from a protective casing which houses a means of interrupting the electricity, such as a mechanical pushbutton, a mechanical or proximity dimmer (potentiometer ), a tactile switch, or a proximity switch , connected between an input connector and an output connector that, respectively, are connected to the phase and neutral cables, is distinguished by comprising, a power supply connected between said input and output connectors and at least one USB connection port connected to said power supply.

Preferably, furthermore, the switch further comprises an electromagnetic interference filter or semi-filter connected between the input connector and the power supply to avoid interference.

In any case, the switch can include one, two, three or more USB connectors connected in parallel to the power supply.

### DESCRIPTION OF THE DRAWINGS

To complement this description, and in order to achieve a better understanding of the characteristics of the invention, there is a set of plans attached to this specification, comprising an integral part of said specification, in which, for illustrative and non-limiting purposes, the following has been represented:
Figure number 1.- Shows a side perspective view of an example of embodiment of the cable switch with USB charger, subject of the invention, specifically, an example with a female connector for USB cable, displaying its general external configuration and the main parts and elements it comprises;
Figure number 2.- Shows a perspective view of another embodiment of a cable switch with USB charger, according to the invention, specifically an example with two female connectors for USB cable;
Figures number 3 and 4.- Show plan views of the examples of a cable switch with USB charger, according to the invention, shown respectively in Figures 1 and 2; and
Figures 5 and 6.- Show diagrams of the internal components of the cable switch with USB charger of the invention, with one and two USB connectors, according to the examples shown respectively in Figures 1, 3 and 2, 4.

### PREFERRED EMBODIMENT OF THE INVENTION

In view of the mentioned figures, and according to the adopted numbering, we can observe therein respective embodiments not limitative of the switch cable USB charger of the invention which comprises what is described in detail below.

Thus, as can be seen in said figures, the cable switch (1) (both table and floor) of the invention is made up of a protective casing (2) inside of which some means of switching the electricity on and off are housed (3), such as a mechanical pushbutton, a mechanical or proximity dimmer (potentiometer), a tactile switch, or a proximity switch, connected between an input connector (4) and an output connector (5) that, in turn, are connected to the phase (F) and neutral (N) wires of the electrical cable (6) in which said switch is installed and, based on this already known configuration, is distinguished by comprising, also housed in the inside said casing (2), a power source (7) connected between the input connector (4) and the output connector (5) and, at least one USB connection port (8) connected to said power source (7), making it suitable as a universal charger for electronic devices.

Preferably, the switch (1) further comprises an EMI filter (9) connected between the input connector (4) and the power supply (7) to avoid interference.

In the preferred embodiment of the invention, the power supply (7) is a power source that converts the alternating current of 110-220V, into direct current of 5V2A.

Optionally, the housing (2) of the switch (1) includes two, three or more USB connectors (8) connected in parallel to the power supply (7). Figures 1, 3 and 5 show an example of the switch (1) with a single USB connector (8), and, in Figures 2, 4 and 6, an example of the switch (1) with two USB connectors (8), with the understanding that this is not limiting, and that a switch can be manufactured with a greater number of USB connectors (8) incorporated in the same housing (2).

In any case, preferably, the USB connector or connectors (8) of the switch is/are female connection ports.

Having sufficiently described the nature of this invention, as well as the manner of implementing it, it is not considered necessary to make its explanation more extensive since any expert in the field may understand its scope and the advantages derived from it.

## Claims

1. Cable switch with USB charger that, constituted from a protective casing (2) inside of which some means of switching electricity on and off are housed (3), connected between an input connector (4) and an output connector (5) which, in turn, are connected to the phase (F) and neutral (N) wires of the electrical cable (6) in which said switch is installed, is **characterized by** also comprising, also housed inside said casing (2), a power supply (7) connected between the input connector (4) and the output connector (5) and, at least, one USB connection port (8) connected to said power supply (7).

2. Cable switch with USB charger, according to claim 1, **characterized by** further comprising an EMI filter (9) connected between the input connector (4) and the power supply (7).

3. Cable switch with USB charger, according to claim 1 or 2, **characterized in that** the housing (2) includes two, three or more USB connectors (8) connected in parallel to the power supply (7).

4. Cable switch with USB charger, according to any of claims 1 or 3, **characterized in that** the USB connector or connectors (8) is/are female connection ports.

5. Cable switch with USB charger, according to any of claims 1 to 3, **characterized in that** the power source (7) is a power source that converts 110-220V alternating current into 5V2A direct current.
